# EUROPEAN PATENT APPLICATION

(11) **EP 4 757 254 A1**
(43) Date of publication of application: **10.06.2026**
(21) Application number: 24851314.5
(22) Date of filing: 14.03.2024
(51) Int. Cl.: H04L 12/14, H04M 15/00, G06Q 10/00, G06F 3/0484, H04M 3/42, G06F 9/451, G06Q 50/10, H04L 12/28, H04W 4/24

(54) **NOTIFICATION SYSTEM, TERMINAL DEVICE, NOTIFICATION METHOD, AND PROGRAM**

(30) Priority: 04.08.2023 JP 2023127468
(71) Applicant: Panasonic Intellectual Property Management Co., Ltd., Kadoma-shi, Osaka 571-0057 (JP)
(72) Inventor: YONEDA, Yuka, kadoma-shi, Osaka 571-0057 (JP); IKEDA, Yoichi, kadoma-shi, Osaka 571-0057 (JP); TANABE, Naohisa, kadoma-shi, Osaka 571-0057 (JP)
(74) Representative: Novagraaf International SA
(86) International application number: PCT/JP2024/010099
(87) International publication number: WO 2025/032880

(57) **Abstract**

A notification system (100) includes an information obtainer (110) and an information generator (120). The information obtainer (110) that obtains first language information related to a first language set for a first home appliance (200) and second language information related to the second language set for the second home appliance (300) different from the first home appliance (200). The information generator (120) generates usage information related to a method for using the first home appliance (200), based on the first language information and the second language information, and outputs the usage information. When the first language shown in the first language information is different from the second language shown in the second language information, the information generator (120) generates the usage information that is expressed in the second language.

## Description

### [Technical Field]

The present disclosure relates to a notification system and the like which notify a user of information related to a method for using a home appliance.

### [Background Art]

Patent Literature (PTL) 1 discloses a voice guidance system. In this voice guidance system, when the CPU of the voice ECU detects the vehicle's position information using a position detector, and determines from the position information and stored map data that the vehicle's position has moved between areas with different languages used as dialects or official languages, it determines the language corresponding to the vehicle's position information, and transmits a request signal requesting transmission of voice information in that language to the voice information center by the transmitting/receiving apparatus. When the CPU of the voice ECU receives voice information from the voice information center by the transmitting/receiving apparatus, the voice information is updated with the voice information transmitted from the voice information center.

### [Citation List]

### [Patent Literature]

[PTL 1] Japanese Unexamined Patent Application Publication No. 2009-25409

### [Summary of Invention]

### [Technical Problem]

The present disclosure provides a notification system and the like which allow the user to operate the home appliances used in an efficient manner.

### [Solution to Problem]

A notification system according to one aspect of the present disclosure is a notification system for notifying a user of information related to a method for using a first home appliance, the notification system including: an information obtainer that obtains first language information related to a first language set for the first home appliance and second language information related to a second language set for a second home appliance different from the first home appliance; and an information generator that generates usage information related to a method for using the first home appliance, based on the first language information and the second language information, and outputs the usage information, wherein when the first language shown in the first language information is different from the second language shown in the second language information, the information generator generates the usage information that is expressed in the second language.

A terminal apparatus according to one aspect of the present disclosure is a terminal apparatus that communicates with the notification system according to one aspect of the present disclosure, the terminal apparatus including: a terminal communicator that obtains the usage information output from the notification system, the usage information having been generated and output after the notification system begins communication with the terminal apparatus; and a presenter that presents the usage method obtained by the terminal communicator to the user.

The notification method according to one aspect of the present disclosure is a notification method for notifying a user of information related to a method for using a first home appliance, the notification method including: obtaining first language information related to a first language set for the first home appliance and second language information related to a second language set for a second home appliance different from the first home appliance; when the first language shown in the first language information is different from the second language shown in the second language information, generating usage information related to the method for using the first home appliance, based on the first language information and the second language information, the usage information being expressed in the second language; and outputting the usage information that has been generated.

A program according to one aspect of the present disclosure causes one or more processors to execute a notification method according to one aspect of the present disclosure.

### [Advantageous Effects of Invention]

According to the notification system and the like in this disclosure, the home appliance used by the user can be operated efficiently.

### [Brief Description of Drawings]

[FIG. 1]

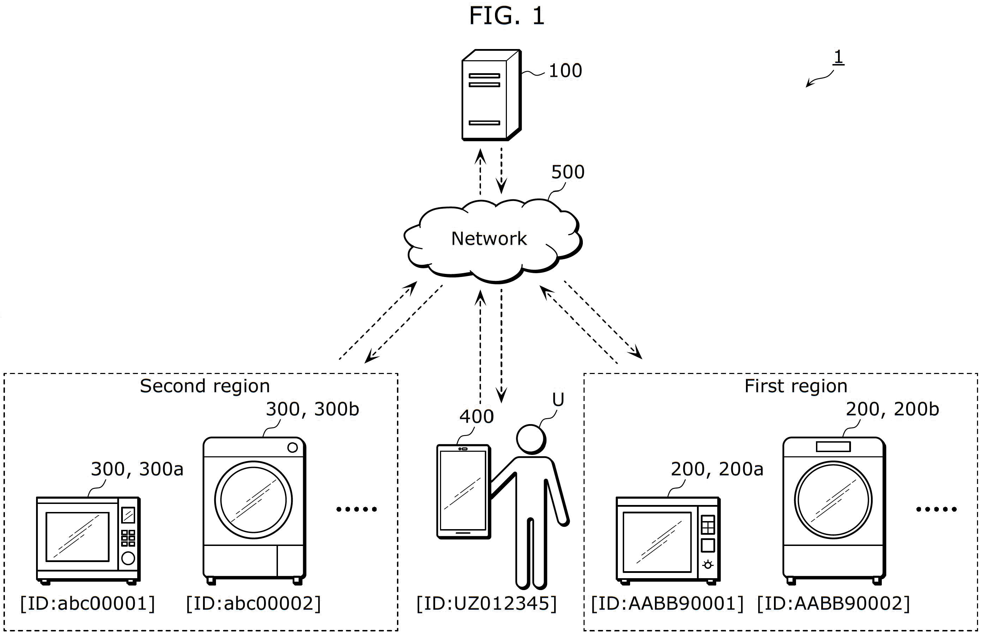

   FIG. 1 is a diagram showing an outline of the configuration of a home appliance setting system according to Embodiment 1.
[FIG. 2]

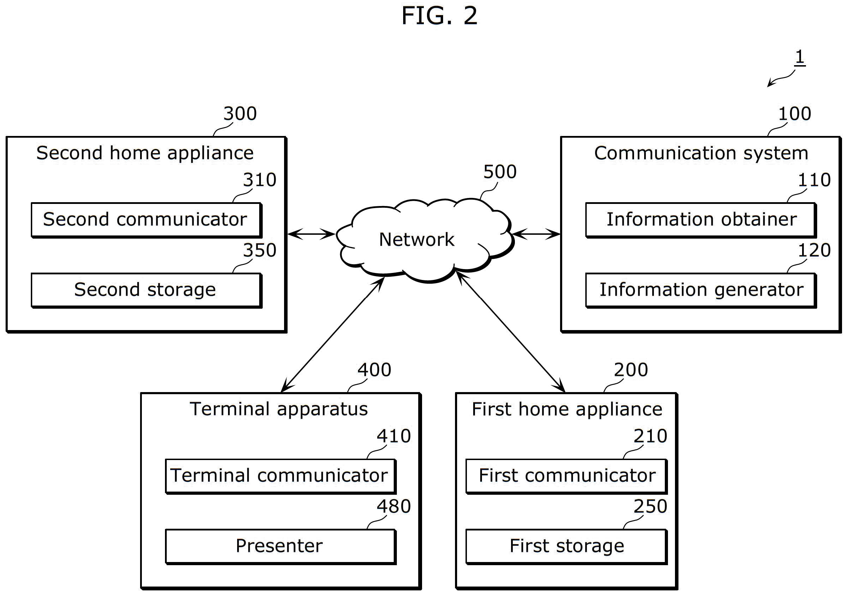

   FIG. 2 is a block diagram showing the basic functional configuration of a notification system and the like according to Embodiment 1.
[FIG. 3]

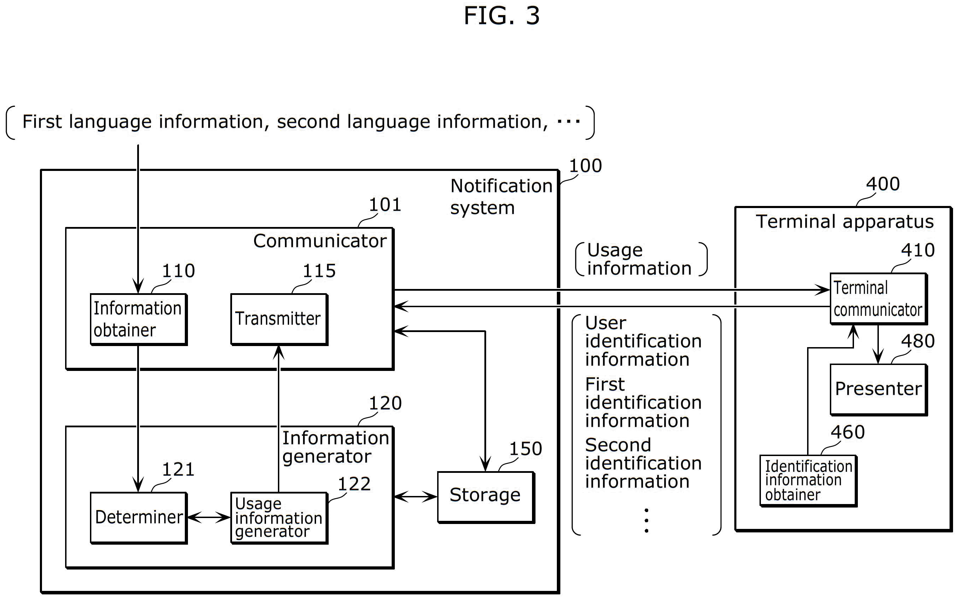

   FIG. 3 is a block diagram showing a specific example of the functional configuration of the notification system according to Embodiment 1.
[FIG. 4]

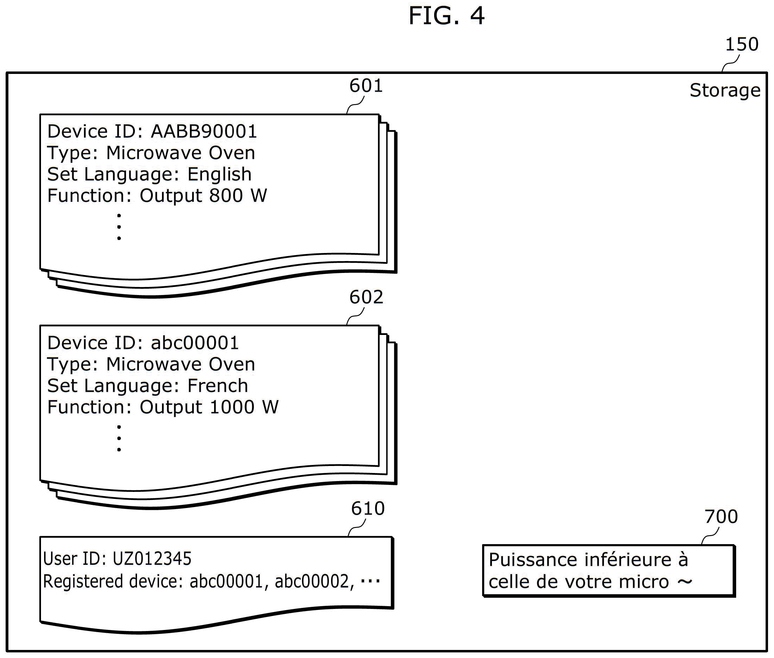

   FIG. 4 is a diagram showing an example of information stored in the storage included in the notification system according to Embodiment 1.
[FIG. 5]

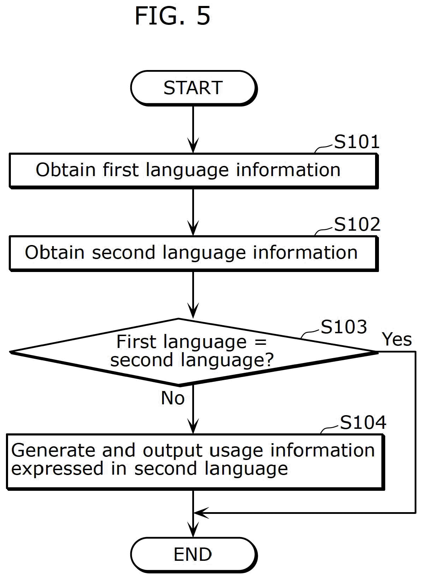

   FIG. 5 is a flow chart showing an outline of the operation of the notification system according to Embodiment 1.
[FIG. 6]

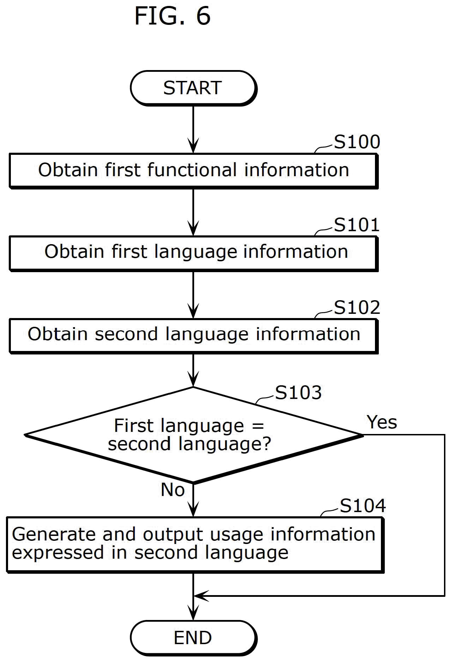

   FIG. 6 is a flow chart showing a specific example of the operation of the notification system according to Embodiment 1.
[FIG. 7A]

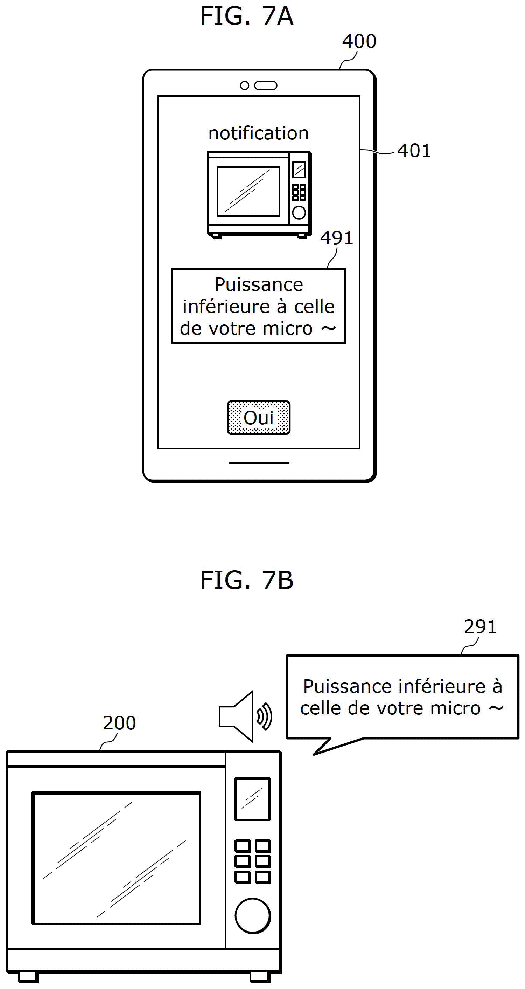

   FIG. 7A is a diagram showing a first example of presentation based on usage information output from the notification system according to Embodiment 1.
[FIG. 7B]
   FIG. 7B is a diagram showing a second example of presentation based on usage information output from the notification system according to Embodiment 1.
[FIG. 8]

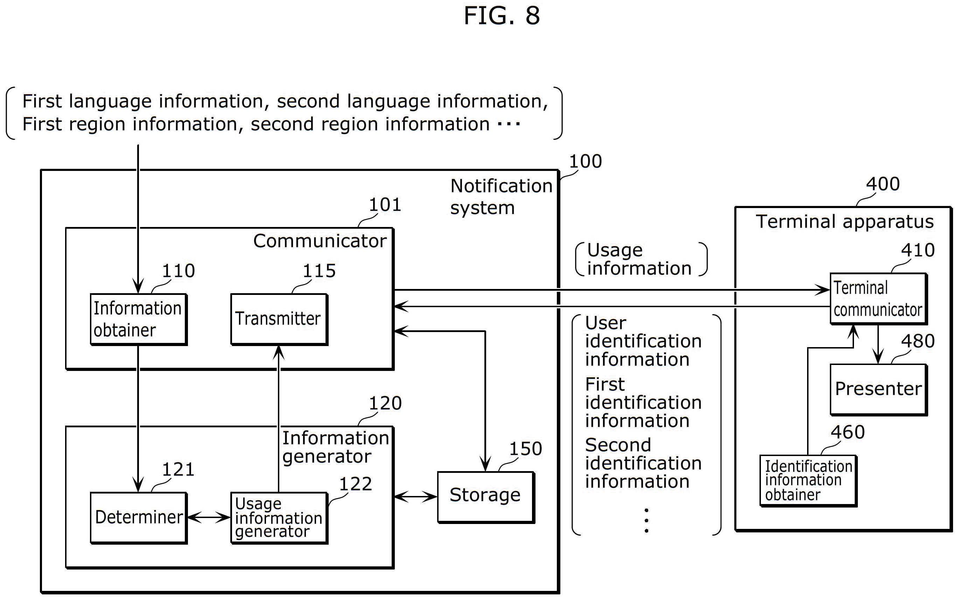

   FIG. 8 is a block diagram showing the functional configuration of the notification system according to Embodiment 2.
[FIG. 9]

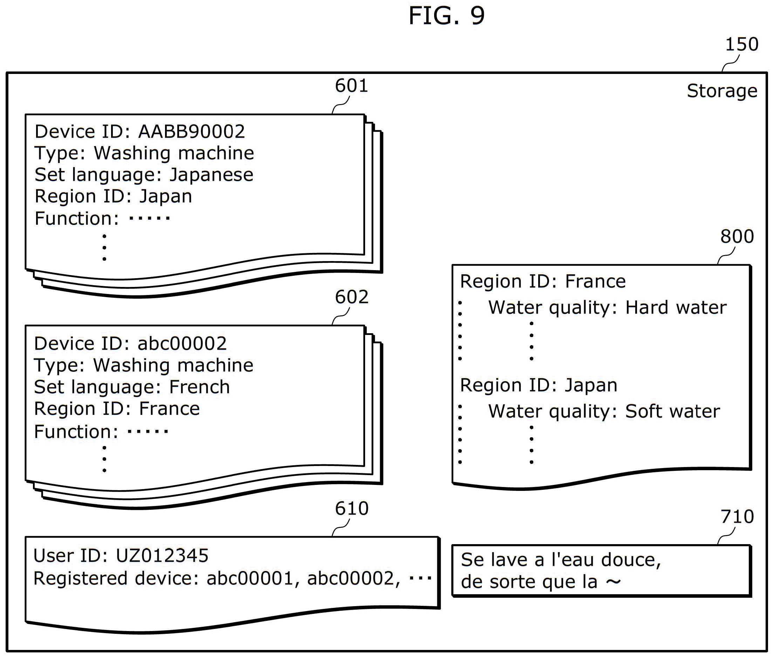

   FIG. 9 is a diagram showing an example of information stored in the storage of the notification system according to Embodiment 2.
[FIG. 10]

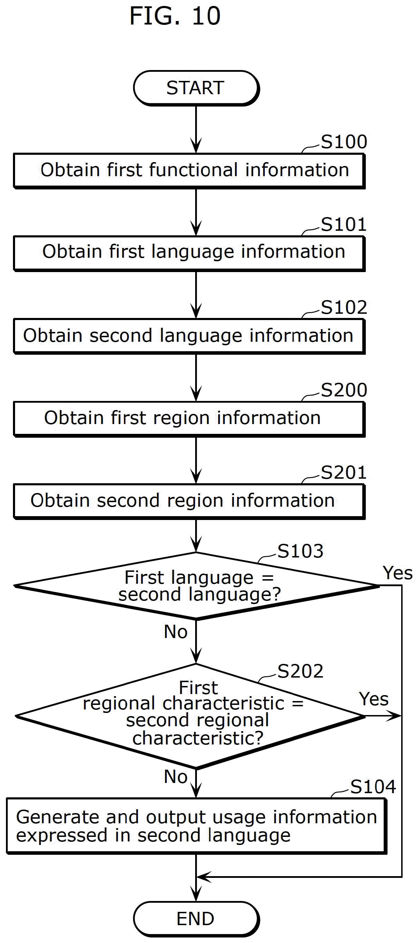

   FIG. 10 is a flow chart showing an example of the operation of the notification system according to Embodiment 2.
[FIG. 11]

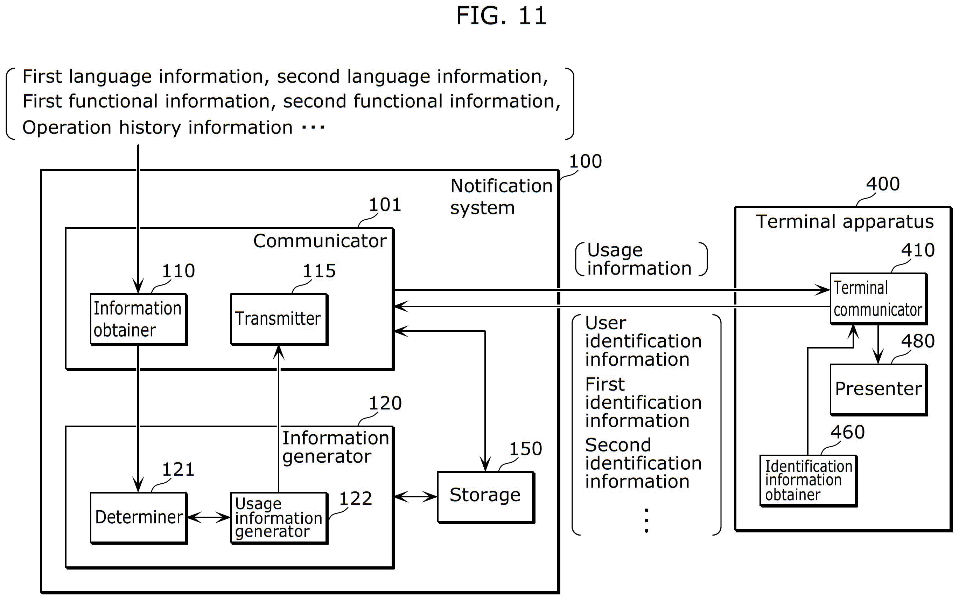

   FIG. 11 is a block diagram showing the functional configuration of the notification system according to Embodiment 3.
[FIG. 12]

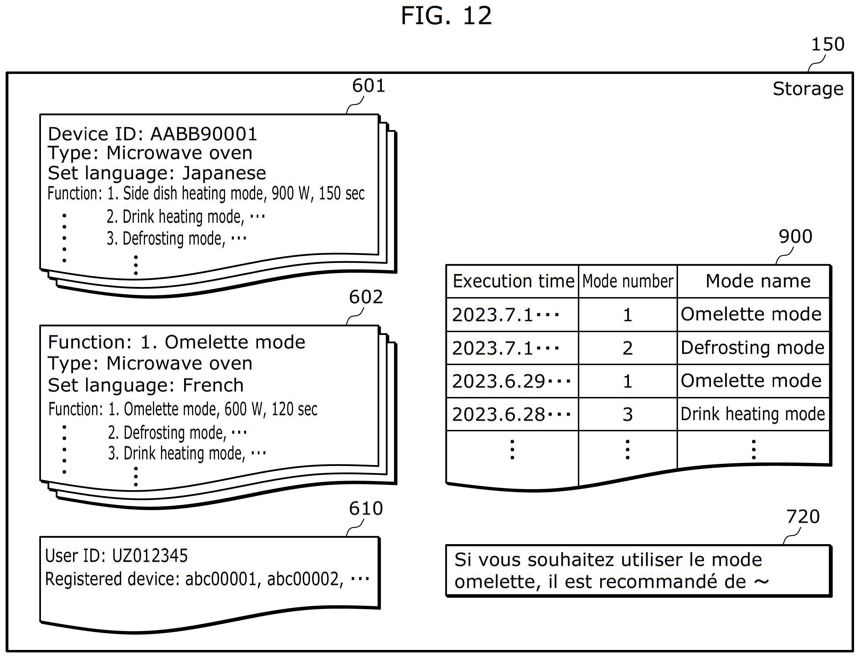

   FIG. 12 is a diagram showing an example of information stored in the storage included in the notification system according to Embodiment 3.
[FIG. 13]

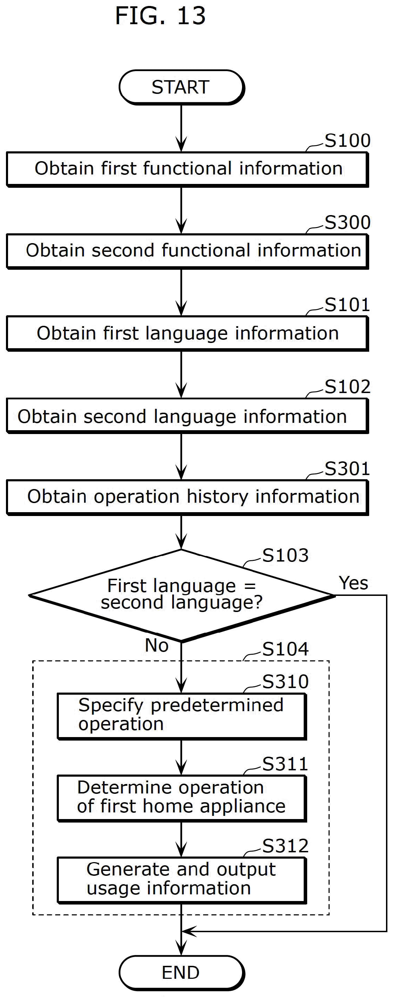

   FIG. 13 is a flow chart showing an example of the operation of the notification system according to Embodiment 3.

### [Description of Embodiments]

The inventors of the present application have found that the following problems arise when users use home appliances.

For example, when a user leaves the user's home where the user lives in a daily basis and stays in a different region (for instance, a country different from where the user's home is located), the user will use a home appliance (hereinafter referred to as a first home appliance) at the place of stay. In this case, the language set for the first home appliance may differ from the language set for the home appliance (hereinafter referred to as the second home appliance) used by the user at home. For example, the user interface included in the first home appliance may display information related to the usage method in a first language different from the second language set for the second home appliance. In this case, the user may use the first home appliance without a clear understanding of the usage method or with insufficient understanding of the usage method. That is, the user ends up using the first home appliance in an anxious state. As a result, due to repeated trial and error in setting up the first home appliance, and the like, the first home appliance being used in a setting that results in an undesired outcome for the user, or the like, an operation that is not inherently necessary may be performed for the first home appliance.

With regard to solving this problem, for example, according to the voice guidance system disclosed in PTL 1, the position where a vehicle equipped with the voice guidance system travels is detected, voice information in the language corresponding to the detected position is obtained, and voice guidance is provided using the obtained voice information. That is, the vehicle is provided with voice guidance in the language used in the region in which the vehicle resides. Therefore, when the technology disclosed in PTL 1 is applied, the language of the region in which the first home appliance is installed is set to the first home appliance. Therefore, it is difficult to solve the above-mentioned problem using the technology disclosed in PTL 1.

This disclosure was made based on such knowledge, and as a result of intensive research, the inventors of the present invention came up with an idea for a notification system that can efficiently operate home appliances used by users.

Hereinafter, the embodiment will be described in detail with reference to the drawings as appropriate. However, more detailed explanations may be omitted in some cases. For example, detailed descriptions of already well-known matters and duplicate explanations for substantially the same configuration may be omitted. This is to avoid the following explanation being more redundant than necessary and to facilitate understanding by those skilled in the art.

It should be noted that the accompanying drawings and the following description are provided to enable those skilled in the art to fully understand the present disclosure., and are not intended to limit the subject matter set forth in the claims. The numerical values, components, arrangement and connections of components, as well as the steps and order of steps, and the like shown in the following embodiments are merely examples and are not intended to limit the present invention. Therefore, among the components in the following embodiments, components not described in the independent claims that show the broadest concept of the present invention are described as arbitrary components.

### [Embodiment 1]

### [1-1. Overall configuration]

First, an outline of home appliance setting system 1 including notification system 100 according to Embodiment 1 will be explained with reference to FIG. 1 and FIG. 2. FIG. 1 is a diagram showing an outline of the configuration of home appliance setting system 1 according to Embodiment 1. FIG. 2 is a block diagram showing the basic functional configurations of notification system 100, first home appliance 200, second home appliance 300, and terminal apparatus 400 according to Embodiment 1.

As shown in FIG. 1, home appliance setting system 1 according to the present embodiment includes notification system 100, first home appliance 200, second home appliance 300, and terminal apparatus 400. Notification system 100, first home appliance 200, second home appliance 300, and terminal apparatus 400 are connected via network 500. Network 500 is a communication network such as the Internet or a mobile communication network.

Notification system 100 is a computer system in which notifies user U of usage information that is information related to the method for using first home appliance 200 and expressed in the language set in second home appliance 300.

As shown in FIG. 2, notification system 100 includes, as basic functional configurations, information obtainer 110 and information generator 120. Information obtainer 110 obtains first language information related to the first language set in first home appliance 200 and second language information related to the second language set in second home appliance 300 that is different from first home appliance 200. Information generator 120 generates usage information related to a method for using first home appliance 200, based on the first language information and the second language information, and outputs the usage information. When the first language shown in the first language information is different from the second language shown in the second language information, information generator 120 generates the usage information that is expressed in the second language. That is, information generator 120 generates and outputs usage information expressed in a language set in second home appliance 300 installed in the home of a user (user U (see FIG. 1)). The usage information output from information generator 120 is transmitted to, for example, terminal device 400 or first home appliance 200 via network 500.

In the present embodiment, notification system 100 is implemented by a computer having one or more processors. Notification system 100 may be implemented by a plurality of computers connected by a communication network such as network 500 and one or more storage apparatuses, and the like. That is, the functions of information obtainer 110 and information generator 120 included in notification system 100 can be implemented by one or more processors executing a predetermined program.

First home appliance 200 is a home appliance installed in a place where user U is staying that is different from the place of residence of user U, such as a hotel where user U stays when traveling abroad, and the like. The predetermined unit region including the place where user U is staying is an example of a first region. The predetermined unit region including the place of residence of user U is an example of a second region. The units of the first and second regions may be, for example, a country, or a state, prefecture, or town, or the like that is smaller than the country. For example, when user U residing in France stays in Japan, the first region can be defined as "Japan" and the second region can be defined as "France". In FIG. 1, first home appliance 200a, which is a microwave oven, and first home appliance 200b, which is a washing machine, are illustrated as first home appliance 200.

As shown in FIG. 2, first home appliance 200 includes first communicator 210 and first storage 250 as basic functional configurations. First communicator 210 communicates with notification system 100 via network 500. First storage 250 stores first language information and the like indicating the language (first language) set in first home appliance 200. First home appliance 200 can transmit various kinds of information, such as first language information stored in first storage 250, from first communicator 210 to notification system 100.

The first language set in first home appliance 200 is the language used for the buttons (not shown) and the character string displayed on the liquid crystal display (not shown) included in first home appliance 200. The first language may be changed by a predetermined operation by user U. When the first language is changed, first storage 250 rewrites the stored first language information with first language information indicating the first language after the change. First communicator 210 transmits, for example, the first language information stored in first storage 250 to notification system 100 by a predetermined operation by user U. When the first language information is rewritten in first storage 250, first communicator 210 transmits the rewritten first language information to notification system 100. First communicator 210 may transmit the first language information to notification system 100 via terminal apparatus 400 operated by user U.

Second home appliance 300 is a home appliance installed in a second region including the place of residence of user U, such as a home where user U lives in a daily basis. In FIG. 1, second home appliance 300a, which is a microwave oven, and second home appliance 300b, which is a washing machine, are illustrated as second home appliance 300.

As shown in FIG. 2, second home appliance 300 includes second communicator 310 and second storage 350 as basic functional configurations. Second communicator 310 communicates with notification system 100 via network 500. Second storage 350 stores second language information and the like indicating the language (second language) set in second home appliance 300. Second home appliance 300 can transmit various kinds of information, such as second language information stored in second storage 350, from second communicator 310 to notification system 100.

The second language set in second home appliance 300 is the language used for the buttons (not shown) and the character string displayed on the liquid crystal display (not shown) of second home appliance 300. The second language may be changed by a predetermined operation by user U. When the second language is changed, second storage 350 rewrites the stored second language information with second language information indicating the second language after the change. Second communicator 310 transmits, for example, the second language information stored in second storage 350 to notification system 100 by a predetermined operation by user U. When the second language information is rewritten in second storage 350, second communicator 310 transmits the rewritten second language information to notification system 100. Second communicator 310 may transmit the second language information to notification system 100 via terminal apparatus 400 operated by user U. Terminal apparatus 400 may exchange information with second home appliance 300 by communicating with second home appliance 300 by, for example, wireless communication. Examples of the types of wireless communication include Wi-Fi (registered trademark), Bluetooth (registered trademark), near field communication (NFC) via a loop antenna, infrared communication, or the like.

In the present embodiment, each of the first and second language information is information indicating the type of language, such as Japanese, English, Chinese (Mandarin and Cantonese, etc.), and the like. For example, when the language set in first home appliance 200 is English, the first language information may be "English," which is the name of the language itself, or may be a code (language code) or the like that identify "English."

The first language shown in the first language information and the second language shown in the second language information do not depend on the country in which each of first home appliance 200 and second home appliance 300 is developed or manufactured, the language used in that country, and the region in which first home appliance 200 and second home appliance 300 are installed. For example, when first home appliance 200 manufactured in Japan is installed in Japan (i.e., when the first region is Japan), English, French, Chinese, or the like, which are languages other than Japanese, may be set in first home appliance 200. This is the same for the second language set in second home appliance 300.

In the present embodiment, second home appliance 300 is a home appliance used by user U in daily basis, so there may be multiple official languages at the place of residence of user U. However, even in this case, second communicator 310 can transmit the second language information, which indicates the language used by user U in daily basis, to notification system 100, by obtaining the second language information stored in second storage 350.

In the present embodiment, FIG. 1 illustrates a microwave and a washing machine as examples of first home appliance 200 and second home appliance 300, but the types of first home appliance 200 and second home appliance 300 are not limited to a microwave and a washing machine. For example, an air conditioner, a refrigerator, a rice cooker, a vacuum cleaner, a television, a recorder (recording device), a humidified air purifier, and the like may be used as first home appliance 200 and second home appliance 300. That is, there is no particular limitation on the types of first home appliance 200 and second home appliance 300 as long as they can be connected to notification system 100 via network 500 such as the Internet.

As shown in FIG. 1, terminal apparatus 400 is, for example, a mobile terminal used by user U at the place of residence or the place of stay of user U. Terminal apparatus 400 includes terminal communicator 410 and presenter 480. Terminal communicator 410 obtains usage information that is output from notification system 100 and is related to the usage of first home appliance 200. Presenter 480 presents the usage information obtained by terminal communicator 410 to user U. Specifically, presenter 480 includes display panel 401 (described later with reference to FIG. 7A) such as a liquid crystal panel or an organic EL panel for displaying images, a speaker device for outputting sound, and the like. Presenter 480 displays the character strings and the like based on usage information obtained by terminal communicator 410 on display panel 401, and/or outputs the voice based on the usage information from the speaker device.

An application (hereinafter referred to as a "setting app") required to use notification system 100 is installed on terminal apparatus 400. Terminal apparatus 400 starts the setting app by the operation of user U. The setting app causes presenter 480 to present usage information to user U in response to a predetermined operation by user U. Terminal apparatus 400 includes one or more processors capable of executing the setting app, a storage apparatus that stores information and the like necessary for the execution of the terminal apparatus, and the like.

Terminal apparatus 400 may be connected to notification system 100 via network 500 such as the Internet or a mobile communication network. Terminal apparatus 400 may be, for example, a smartphone, a tablet, a notebook-type personal computer, or the like.

### [1-2. Configuration of notification system]

Next, the configuration of notification system 100 according to Embodiment 1 will be described with reference to FIG. 2 and FIG.3.

FIG. 3 is a block diagram showing a specific example of the functional configuration of notification system 100 according to Embodiment 1. In FIG. 3, the illustration of network 500 is omitted. Although the configuration of terminal apparatus 400 is also illustrated in FIG. 3, the configuration, operation, and the like of terminal apparatus 400 will be described later. FIG. 4 is a diagram showing an example of information stored in storage 150 included in notification system 100 according to Embodiment 1.

As shown in FIG. 2 and FIG. 3, notification system 100 includes, for example, communicator 101, information generator 120, and storage 150. Communicator 101 includes information obtainer 110 for obtains the first language information and the second language information, and transmitter 115 for transmitting usage information output from information generator 120.

Information generator 120 includes determiner 121 that determines whether the first language shown in the first language information and the second language shown in the second language information are the same, and usage information generator 122 that generates usage information in accordance with the result of the determination of determiner 121.

Storage 150 stores information necessary for various information processing performed by notification system 100. Storage 150 includes a storage apparatus such as a hard disk or a semiconductor memory, and is capable of exchanging information with information generator 120 and communicator 101. Storage 150 can store, for example, first language information and second language information obtained by information obtainer 110, as well as information necessary for the generation of usage information by usage information generator 122, and the like.

More specifically, storage 150 stores first home appliance information 601, second home appliance information 602, and user device information 610, as shown in FIG. 4, for example. FIG. 4 illustrates first home appliance information 601 corresponding to first home appliance 200a, second home appliance information 602 corresponding to second home appliance 300a, and user device information 610 corresponding to user U.

First home appliance information 601 is information transmitted, for example, from first home appliance 200 and obtained by information obtainer 110 of notification system 100. First home appliance information 601 includes information items such as "device ID", which is the first identification information that identifies first home appliance 200, "type" which indicates the type of first home appliance 200, "setting language", which is the first language information, and "function" which is the first functional information related to the function of first home appliance 200. Storage 150 further stores usage information 700, which is generated using first home appliance information 601 or the like, and indicates the notification content to be notified to user U.

Second home appliance information 602 is information transmitted, for example, from second home appliance 300 and obtained by information obtainer 110 of notification system 100. Second home appliance information 602 includes information items such as "device ID", which is the second identification information that identifies second home appliance 300, "type" which indicates the type of second home appliance 300, "setting language", which is second language information, and "function" which is second functional information related to the functions of second home appliance 300.

User device information 610 is information transmitted, for example, from terminal apparatus 400 and obtained by information obtainer 110 of notification system 100. User device information 610 includes a "user ID" which is user identification information that identifies user U, and a "registered device" which is information indicating second home appliance 300 associated with the user identification information. In user device information 610 shown in FIG. 4, the user identification information of user U and the second identification information of second home appliances 300a and 300b installed in user U's home are associated with each other.

It should be noted that other information not shown in FIG. 4 may be stored in storage 150, such as first home appliance information 601 corresponding to first home appliance 200b and second home appliance information 602 corresponding to second home appliance 300b. Each of first home appliance information 601 and second home appliance information 602 may be transmitted from an apparatus different from first home appliance 200, such as terminal apparatus 400 or the like. The plurality of information items included in first home appliance information 601, second home appliance information 602, and user device information 610 shown in FIG. 4 and the contents thereof are illustrative. First home appliance information 601, second home appliance information 602, and user device information 610 may contain information not shown in FIG. 4. The contents included in first home appliance information 601, second home appliance information 602, and user device information 610 may be stored in storage 150 in a distributed manner across a plurality of files. For example, it is assumed that the "setting language" and "function" included in first home appliance information 601 are included in two separate files from each other. In this case, when the two files contain the first identification information (device ID "AABB90001"), the "setting language" and "function" can be associated with each other using the first identification information. That is, the various kinds of information stored in storage 150 may be stored so that it can be used to generate usage information by information generator 120. Storage 150 may include a plurality of storage apparatuses separate from each other. In this case, various kinds of information included in first home appliance information 601, second home appliance information 602, and user device information 610 may be stored in one or more storage apparatuses out of the plurality of storage apparatuses.

In information generator 120, determiner 121 obtains the first language information and the second language information from information obtainer 110 or storage 150, and determines whether the first language and the second language are the same. When the first language shown in the first language information is different from the second language shown in the second language information, determiner 121 transmits a determination result indicating that the first language is different from the second language to usage information generator 122. It should be noted that when determining whether the first language and the second language are the same, determiner 121 determines whether the first language and the second language are the same, regardless of whether the country or region in which the first language and the second language are mainly used is different. For example, standard Mandarin and Cantonese both belong to the same "Chinese" language family, but they are determined as different languages due to differences in characters used (simplified Chinese and traditional Chinese) and grammar. Other languages are also determined as different languages, even if they belong to the same type of language, based on the characters and grammar used.

When the determination result by determiner 121 indicates that the first language is different from the second language, usage information generator 122 generates the usage information to be notified to user U, which is expressed in the second language, and also stores the usage information in storage 150. For example, as shown in FIG. 4, when the set language (i.e., the second language) shown in second home appliance information 602 is French, usage information 700 expressed in French is stored in storage 150. At this time, a plurality of contents may be stored in storage 150 as candidates for the contents of usage information to be notified to user U.

The usage information generated by usage information generator 122 is transmitted to, for example, terminal apparatus 400 from transmitter 115 included in communicator 101. Accordingly, usage information expressed in the second language is obtained by terminal apparatus 400 and presented to user U by presenter 480. That is, user U is notified of the usage information. The usage information only needs to be notified to user U at an appropriate time. For example, if the usage information includes multiple contents (multiple notification contents) to be notified to user U, the multiple notification contents may be notified in multiple separate sessions. When notifying user U over multiple times, for example, usage information generator 122 determines the order in which the notification contents are notified to user U. It should be noted that each of these multiple notification contents may be treated as "usage information", and the entire contents including the multiple notification contents may be treated as "usage information".

For example, it is assumed that both first home appliance 200 and second home appliance 300 are microwave ovens. That is, it is assumed that notification system 100 obtains first language information from first home appliance 200a and second language information from second home appliance 300a. Furthermore, for example, it is assumed that the usage information includes the operation method for heating side dishes and the operation method for pre-processing vegetables as the notification content to be notified to user U. In this case, usage information generator 122 of notification system 100 may determine the method for heating side dishes, which is presumed to be used frequently by many users, as the first usage information, and the operation method for preprocessing vegetables as the second usage information. In this case, terminal apparatus 400 presents user U with the method for heating side dishes, which is the first usage information, and then the operation method for preprocessing vegetables, the second usage information, is presented to user U.

For example, first home appliance information 601 stored in storage 150 includes usage information indicating the method for heating side dishes and expressed in the first language as the first functional information (not shown in FIG. 4). Usage information generator 122 converts the usage information expressed in the first language into usage information expressed in the second language, for example, by translating the usage information expressed in the first language by using a translation function provided in the notification system 100 or an external translation system connectable via network 500. This generates usage information obtained by terminal apparatus 400 and presented to user U. It should be noted that machine translation using artificial intelligence may be used to convert usage information expressed in the first language into usage information expressed in the second language. A database that stores operating methods for various home appliances, and the like, expressed in multiple languages may be used for this conversion. The database may be provided in notification system 100 or an external computer connected to notification system 100 via network 500. That is, obtaining usage information expressed in the second language by using a machine translation, a database, or the like is included in "generating usage information expressed in a second language."

### [1-3. Operation of notification system]

### [1-3-1. Outline of operation of notification system]

Next, an outline of the operation of notification system 100 according to Embodiment 1 will be described with reference to FIG. 5.

FIG. 5 is a flow chart showing an outline of the operation of notification system 100 according to Embodiment 1. In the present embodiment, an example of the basic operation of notification system 100 will be explained, assuming that when user U who lives in France and uses French on a daily basis, when user U stays in the United States, user U uses first home appliance 200a, which is a microwave installed at a hotel (place of stay) which is the place of stay in the United States.

First, after being installed, first home appliance 200a at the user U's place of stay and second home electric appliance 300a at the user U's home each start communicating with notification system 100, and then transmit information about the respective appliances to notification system 100. Specifically, first home appliance 200a transmits, to notification system 100, first language information indicating the first language set in first home appliance 200a, for example, as a trigger for a predetermined instruction to first home appliance 200a. Information obtainer 110 of notification system 100 obtains the first language information transmitted from first home appliance 200a (S101).

Specifically, when "English" is set as the language displayed on a button (not shown) or on a liquid crystal display (not shown) of first home appliance 200a, first communicator 210 of first home appliance 200a obtains first language information indicating "English" from first storage 250. First communicator 210 transmits the first language information indicating the first language "English" of notification system 100 via network 500. The first language information is obtained by information obtainer 110 included in communicator 101 of notification system 100, and is stored in storage 150 of notification system 100 along with the first identification information for identifying first home appliance 200a. For example, as shown in FIG. 4, first home appliance information 601 including first language information (set language) and first identification information (device ID) is stored in storage 150.

Second home appliance 300a transmits, for example, second language information indicating the second language set in second home appliance 300a to notification system 100, using a predetermined instruction to second home appliance 300a as a trigger. Information obtainer 110 of notification system 100 obtains the second language information transmitted from second home appliance 300a (S102). Specifically, when "French" is set as the language displayed on a button (not shown) or on a liquid crystal display (not shown) of second home appliance 300a, second communicator 310 of second home appliance 300a obtains second language information indicating "French" from second storage 350. Second communicator 310 transmits, via network 500, second language information indicating the second language "French" to notification system 100. The second language information is obtained by information obtainer 110 of notification system 100, and is stored in storage 150 of notification system 100 along with information for identifying second home appliance 300a. For example, as shown in FIG. 4, second home appliance information 602 including second language information (set language) and second identification information (device ID) is stored in storage 150.

When using first home appliance 200a installed at the hotel which is the place of stay, user U launches a setting app installed on terminal apparatus 400 of user U to use notification system 100.

In information generator 120 of notification system 100, determiner 121 determines whether the first language shown in the first language information obtained by information obtainer 110 is the same as the second language shown in the second language information obtained by information obtainer 110 (S103). When determiner 121 determines that the first language and the second language are different (No in S103), usage information generator 122 included in information generator 120 generates usage information to be notified to user U and outputs the usage information (S104).

In this example, the first language shown in the first language information is "English", and the second language shown in the second language information is "French". Therefore, determiner 121 determines that the first language and the second language are not the same (i.e., different) (No in S103). It should be noted that when user U stays at a French hotel as a place of stay in the US, or the like, when the first language set in first home appliance 200a is "French," information obtainer 110 of notification system 100 obtains first language information indicating "French". In this case, determiner 121 determines that the first language and the second language are the same (Yes in S103), and the operation of notification system 100 ends.

Next, when determiner 121 of information generator 120 determines that the first language and the second language are different, usage information generator 122 of information generator 120 generates and outputs usage information expressed in the second language shown in the second language information (S104). The usage information output by usage information generator 122 is transmitted to terminal apparatus 400 by transmitter 115. As a result, presenter 480 of terminal communicator 410 of terminal apparatus 400 presents the usage information expressed in the second language to user U using images or/and voices, etc. This allows user U to check usage information expressed in the same language as the language set in the home microwave (second home appliance 300a).

In FIG. 5, obtaining first language information (S101) and obtaining second language information (S102) that are part of the series of operations performed by notification system 100 according to the present embodiment are described in this order, but the order of obtaining first language information and obtaining second language information is not limited thereto. For example, notification system 100 may obtain the first language information after obtaining the second language information, or may obtain the first language information and the second language information at substantially the same timing.

Obtaining the first language information (S101) and obtaining the second language information (S102) may be executed, for example, by user U launching the setting app on terminal apparatus 400 as a trigger.

These supplementary matters related to the order or timing of execution of various operations performed by notification system 100 are applied to the order or timing of execution of various operations explained with reference to the flow chart of FIG. 6,and the like, described later.

It should be noted that in obtaining the second language information (S101), notification system 100 may obtain the language set for the device other than second home appliance 300a as the second language information. For example, it is likely that the setting app installed on terminal apparatus 400 is set to a language that user U uses on a daily basis at the place of residence of user U. For that reason, notification system 100 may obtain the language set in the setting app as second language information.

### [1-3-2. Specific example of operation of notification system 100]

Next, a more specific example of the operation of notification system 100 according to Embodiment 1 will be described with reference to FIG. 6, FIG. 7A, and FIG. 7B. FIG. 6 is a flow chart showing a specific example of operation of notification system 100 according to Embodiment 1. FIG. 7A is a diagram showing a first example of presentation based on usage information output from notification system 100 according to Embodiment 1. FIG. 7B is a diagram showing a second example of presentation based on usage information output from notification system 100 according to Embodiment 1. In FIG. 7A, images that are displayed on presenter 480 of terminal apparatus 400 and are based on usage information received from notification system 100 are schematically represented. In FIG. 7B, a state in which the voice based on the usage information is output from a speaker apparatus (not shown) included in first home appliance 200a is specifically represented.

As shown in FIG. 6, in addition to the operations shown in FIG. 5, notification system 100 obtains first functional information (S100). In the present embodiment, first home appliance information 601 including first home appliance information ("output power 800W") indicating the rated high-frequency output (in FIG. 4 and hereinafter referred to as "output power") of first home appliance 200a, which is, for example, a microwave oven is transmitted from first home appliance 200a. First home appliance information 601 that has been transmitted is obtained by information obtainer 110 and stored in storage 150 (see FIG. 4).

Notification system 100 similarly receives second home appliance information 602 that is transmitted from second home appliance 300a, and includes second functional information indicating second functional information ("output power 1000W"). Second home appliance information 602 is obtained by information obtainer 110 and stored in storage 150 (see FIG. 4).

When using first home appliance 200a installed at the hotel which is the place of stay, user U launches the setting app installed on terminal apparatus 400 of user U. Accordingly, terminal apparatus 400 starts communication with notification system 100. Specifically, the setting app launched in terminal apparatus 400 starts communication with notification system 100 via network 500. Notification system 100 obtains, from terminal apparatus 400, user identification information ("UZ012345") that identifies user U and first identification information (for example, "AABB90001") that identifies first home appliance 200a. It should be noted that storage 150 stores user device information 610 in advance in which the user identification information of user U and the second identification information for identifying second home appliance 300 installed in user U's home. For example, when user U operates the setting app of terminal apparatus 400, user device information 610 shown in FIG. 4 is stored in storage 150.

For example, after installing second home appliance 300 at home, user U transmits the second identification information for identifying second home appliance 300 and user identification information for identifying terminal apparatus 400 to notification system 100 by using the setting app installed in terminal apparatus 400. The second identification information is information that allows second home appliance 300 to be identified from a plurality of home appliances, such as the serial number, MAC address, or the like of second home appliance 300. The second identification information may be, for example, a combination of user identification information and local home appliance identification information (information that can identify each of a plurality of second home appliances 300 in the home). The user identification information is information that can identify user U from another user. For example, when terminal apparatus 400 is an apparatus used only by user U, identification information of terminal apparatus 400, such as the serial number, MAC address, or the like of terminal apparatus 400, may be used as user identification information.

When terminal apparatus 400 starts communication with notification system 100 by storing various kinds of information in storage 150 in this way, notification system 100 can specify first home appliance 200a that is the target of whether the first language and the second language are the same (S103) by using the first identification information transmitted from terminal apparatus 400. Furthermore, notification system 100 can specify the type of first home appliance 200a from first home appliance information 601 related to first home appliance 200a, and can specify second home appliance 300a that is the target of whether the first language and the second language are the same (S103) from the specified type and user device information 610 specified by the user identification information. Alternatively, when user U operates the setting app, second home appliance 300a is selected from among the plural registered devices included in user device information 610. This allows notification system 100 to specify second home appliance 300a that is the target of whether the first language and the second language are the same (S103).

It should be noted that as shown in FIG. 3, terminal apparatus 400 includes identification information obtainer 460 that obtains first identification information that identifies first home appliance 200. Identification information obtainer 460 includes, for example, a camera and obtains the first identification information from a QR code (registered trademark), a two-dimensional bar code, a sticker that displays a character string, or the like which is photographed by the camera and is attached to first home appliance 200. The first identification information is, for example, a serial number, MAC address, or the like of first home appliance 200. There is no particular limitation on the method in which identification information obtainer 460 obtains the first identification information. Terminal apparatus 400 may obtain first identification information from first home appliance 200a by, for example, communicating with first home appliance 200a via wireless communication. Examples of the types of wireless communication include Wi-Fi (registered trademark), Bluetooth (registered trademark), NFC via a loop antenna, infrared communication, or the like.

Terminal communicator 410 may obtain the first identification information by terminal communicator 410 included in terminal apparatus 400 communicating with first home appliance 200a. That is, identification information obtainer 460 may be part of terminal communicator 410. Identification information obtainer 460 may obtain the first identification information input by user U touching the input interface (in the present embodiment, display panel 401) of terminal apparatus 400. When terminal apparatus 400 is capable of communicating with first home appliance 200a through Wi-Fi (registered trademark), Bluetooth (registered trademark), or the like, various kinds of information may be exchanged between first home appliance 200a and notification system 100 via terminal apparatus 400.

It should be noted that notification system 100 may use each position information of terminal apparatus 400 and first home appliance 200a, as a method for specifying first home appliance 200a that is the target of whether the first language and the second language are the same (S103). For example, when terminal apparatus 400 and first home appliance 200a each have a global positioning system (GPS) transmitter, notification system 100 may use the GPS to obtain the position information of terminal apparatus 400 and first home appliance 200a, respectively. In this case, for example, when the distance between terminal apparatus 400 and first home appliance 200a is less than or equal to a predetermined distance, notification system 100 may specify that the home appliance used by user U is first home appliance 200a.

As mentioned above, determiner 121 of notification system 100 determines whether the first language and the second language are the same (S103). In the present embodiment, determiner 121 determines that the first language and the second language are different (No in S103), and usage information generator 122 included in information generator 120 generates usage information to be notified to user U and outputs the usage information (S104).

Usage information generator 122, for example, converts usage information obtained from first home appliance information 601 or the like stored in storage 150, into usage information expressed in the second language, by a predetermined means such as machine translation or database search. That is, usage information generator 122 generates usage information expressed in "French". For example, it is assumed that first home appliance information 601 includes mode information (not shown) that explains a plurality of operation modes (heating mode, defrost mode, and the like) that can be executed by first home appliance 200a. The mode information includes, for example, the name, number, operation time of each mode, and the like which can be executed by first home appliance 200a. In this case, information generator 120 of notification system 100 generates usage information including mode information expressed in French by using the mode information obtained from storage 150, the machine translation, and the like. The usage information output from usage information generator 122 is transmitted from transmitter 115 included in communicator 101 and is received by terminal apparatus 400 via network 500.

In the present embodiment, for example, as shown in FIG. 4, the output power of first home appliance 200a, which is the microwave oven at the place of stay, is "800W", while the output power of second home appliance 300a, which is the microwave oven at home, is "1000W". In this case, usage information generator 122 generates usage information that corresponds to the difference in output power and is expressed in the second language. Specifically, because the output power of first home appliance 200a is lower than the output power of second home appliance 300a, usage information generator 122 generates usage information expressing the notification content in French such that "The output power of this microwave oven is lower than the output power of microwave ovens in your home, so please set the heating time longer than usual", for example. It should be noted that storage 150 stores a template (not shown) of a usage method when two microwave ovens to be compared have different outputs, and of being written in a predetermined language. Usage information generator 122 can generate usage information 700 (see FIG. 4) expressed in French by converting the template into usage information expressed in French by using machine translation or the like, or by obtaining the template expressed in French from storage 150.

Usage information 700 generated and output by information generator 120 is transmitted from transmitter 115 to terminal apparatus 400. Usage information 700 that has been transmitted is received by terminal communicator 410 of terminal apparatus 400. In this case, as shown in FIG. 7A, an image based on usage information 700 obtained by terminal communicator 410 of terminal apparatus 400 is displayed on display panel 401 included in presenter 480 of terminal apparatus 400. The image includes notification statement 491 written in French. In this way, presenter 480 can present usage information 700 expressed in French to user U, that is, notify user U of usage information 700.

It should be noted that in addition to or in place of displaying notification statement 491, presenter 480 may cause the speaker apparatus (not shown) included in presenter 480 to output a French voice indicating the contents of usage information 700.

The usage information output from information generator 120 may be received by first home appliance 200a in addition to or in place of terminal apparatus 400. For example, when first home appliance 200a receives usage information 700 expressed in French, first home appliance 200a may output voice 291 in French from the speaker apparatus mounted on first home appliance 200a, as shown in FIG. 7B. Even in this case, user U can be notified of usage information 700 expressed in French which is the second language. First home appliance 200a may receive usage information 700 from notification system 100 by communication with notification system 100, and may receive usage information 700 received by terminal apparatus 400 from terminal apparatus 400.

In the above, usage information that is transmitted to terminal apparatus 400 by notification system 100 is exemplified by the usage information related to the operation mode and usage information based on the difference in output power, but there is no particular limitation on the content of usage information transmitted to terminal apparatus 400 by notification system 100. The usage information may include, for example, a method for connecting first home appliance 200a and terminal apparatus 400 via wireless communication, a method for operating first home appliance 200a using terminal apparatus 400, or the like.

In the above, the operation of notification system 100 and the like when user U uses first home appliance 200a, which is a microwave oven, is explained, but there is no particular limitation on the type of first home appliance 200 that is associated with usage information notified to user U. For example, even when first home appliance 200b, which is a washing machine, is used as first home appliance 200, by user U, notification system 100 can perform the operations shown in FIG. 5 and FIG. 6. This allows user U to notify usage information related to the method for using first home appliance 200b, which is a washing machine, expressed in the second language set in the washing machine (second home appliance 300b) at home.

When the languages indicated by the first language information and the second language information are changed, notification system 100 can obtain the first language information and the second language information indicating the changed languages, respectively. For example, when the first language, which is the language used by first home appliance 200 installed in a hotel, is changed, first home appliance 200 uses the change as a trigger to transmit first language information indicating the changed first language to notification system 100. Accordingly, the first language information contained in first home appliance information 601 stored in storage 150 is rewritten with the latest content. Through such a process, notification system 100 can obtain the latest various types of information used for generating and outputting usage information to be notified to user U at that point in time. Notification system 100 may obtain the latest information at that point in time from first home appliance 200 and second home appliance 300 by periodically inquiring with first home appliance 200 and second home appliance 300.

### [1-4. Effects etc.]

As explained above, notification system 100 according to the present embodiment has, for example, technical features shown below.

Notification system 100 according to the present embodiment includes information obtainer 110 and information generator 120. Information obtainer 110 obtains first language information related to the first language set in first home appliance 200 and second language information related to the second language set in second home appliance 300 that is different from first home appliance 200. Information generator 120 generates usage information related to a method for using first home appliance 200, based on the first language information and the second language information, and outputs the usage information. When the first language shown in the first language information differs from the second language shown in the second language information, information generator 120 generates usage information that is expressed in the second language.

According to this configuration, usage information related to the method for using first home appliance 200 is output from notification system 100. This usage information is expressed in the language (second language) set in second home appliance 300. Therefore, when user U who uses second home appliance 300 on a daily basis can check the usage information of first home appliance 200 in the language set for second home appliance 300 when using first home appliance 200. For example, user U can check usage information expressed in the second language using terminal apparatus 400, which is a mobile terminal or the like. Therefore, user U can efficiently use first home appliance 200 in accordance with the user's own intentions. That is, first home appliance 200 used by user U can operate efficiently. For example, the possibility of unnecessary operations being performed by first home appliance 200 is reduced due to user U repeatedly trial and error in operating first home appliance 200 or the like, due to first home appliance 200 being used in procedures or settings that produce results that user U does not desire, or due to the like. Even when the language set in second home appliance 300 installed in the place of residence of user U is different from the language set in first home appliance 200 used by user U at the stay location, the anxiety that user U feels when using first home appliance 200 is reduced. For example, the possibility of using first home appliance 200 by incorrect use is reduced.

Thus, according to notification system 100 according to the present embodiment, the home appliance used by the user can be efficiently operated.

Generally, home appliances are not devices that are transported to and used to the place of stay, so notification system 100 according to the present embodiment is particularly useful when user U stays on a land with a different language from the place of residence. For example, when the user's home is in Japan and the user's place of stay is in the United States, the language displayed on the display panel of first home appliance 200 is "English". For that reason, it cannot be said that user U's use of first home appliance 200 is good. However, according to notification system 100 according to the present embodiment, it is possible to notify user U of usage information expressed in "Japanese" and related to the method for using first home appliance 200 by terminal device 400 owned by user U. As a result, user U will experience less inconvenience or anxiety when using first home appliance 200 at the place of stay. For example, when the speaker apparatus installed in first home appliance 200 at the place of stay is notified of usage information expressed in "Japanese", even when user U has not brought terminal apparatus 400 to the place of stay, usage information expressed in "Japanese" can be notified to user U. This allows user U to use first home appliance 200 comfortably. For that reason, according to notification system 100 according to the present embodiment, there is an advantage that when the language set in second home appliance 300 used by user U in the user's place of residence is different from the language set in first home appliance 200 used at the place of stay, first home appliance 200 at the place of stay can be used efficiently.

In the notification method executed by notification system 100 according to the present embodiment, first language information related to the first language set in first home appliance 200 and second language information related to the second language set in second home appliance 300 that is different from first home appliance 200 are obtained (S101 and S102 in FIG. 5). When the first language shown in the first language information is different from the second language shown in the second language information (No in S103 in FIG. 5), use information that is related to the method for using first home appliance 200 and expressed in the second language is generated based on the first language information and the second language information, and the generated usage information is outputted (S104 in FIG. 5).

According to this notification method, as mentioned above, user U can efficiently use first home appliance 200. That is, first home appliance 200, which is a home appliance used by user U, can operate efficiently.

The program according to the present embodiment can also be implemented as a program for causing one or more processors to execute the notification method by notification system 100 mentioned above.

In notification system 100 according to the present embodiment, information obtainer 110 further obtains first functional information related to the function of first home appliance 200. When generating usage information, information generator 120 generates usage information including first functional information expressed in the second language by using the first functional information.

According to this configuration, notification system 100 can output usage information expressing information related to the function of first home appliance 200 in the language (second language) set in second home appliance 300. Therefore, user U can more quickly check, for example, information or the like related to the operation mode that can be executed by first home appliance 200 or settings of first home appliance 200. As a result, first home appliance 200, which is the home appliance used by user U, can operate more efficiently.

It should be noted that the source of the first functional information obtained by information obtainer 110 may be an apparatus different from first home appliance 200 and terminal apparatus 400. Information obtainer 110 may, for example, obtain first functional information related to the functions of first home appliances 200 from a server apparatus that stores the functions and the like of a plurality of home appliances, and is connected to network 500.

It is not essential to use the usage information in information generator 120 of notification system 100. When the first language shown in the first language information is different from the second language shown in the second language information, information generator 120 may create usage information indicating, for example, the language name of the first language set in first home appliance 200. Even in this case, before using first home appliance 200, for example, user U can know which language the first language set in first home appliance 200 is, based on the usage information expressed in the second language.

More specifically, notification system 100 according to the present embodiment further includes storage 150. Storage 150 stores first home appliance information 601, second home appliance information 602, and user device information 610 (see FIG. 4). First home appliance information 601 includes first identification information for identifying first home appliance 200 and information related to first home appliance 200. Second home appliance information 602 includes second identification information for identifying second home appliance 300 and information related to second home appliance 300. User device information 610 includes user identification information for identifying user U and information for specifying second home appliance 300 associated with the user identification information. First home appliance information 601 includes first language information, and second home appliance information 602 includes second language information. Information obtainer 110 further obtains the first identification information and the user identification information from outside of notification system 100. When information obtainer 110 obtains the first identification information and the user identification information, information generator 120, by referring to storage 150: (i) obtains the first language information from first home appliance information 601 associated with the first identification information; (ii) obtains second language information from second home appliance information 602 associated with user identification information; and (iii) generates usage information based on the obtained first language information and second language information.

It should be noted that in the present embodiment, user device information 610 includes second identification information (for example, "abc00001") for specifying second home appliance 300 as information for identifying second home appliance 300 associated with the user identification information ("UZ012345"). In the present embodiment, information obtainer 110 obtains user identification information and first identification information (for example, "UZ012345" and "AABB90001") transmitted from terminal apparatus 400.

According to this configuration, notification system 100 can efficiently specify various types of information involved in generating and outputting usage information by using first home appliance information 601, second home appliance information 602, and user device information 610 that are stored in storage 150 in advance. This enables efficient execution of various operations related to the generation and output of usage information expressed in the second language. This contributes to making first home appliance 200, which is the home appliance used by user U, operate more efficiently.

Terminal apparatus 400 according to the present embodiment includes terminal communicator 410 and presenter 480. Terminal communicator 410 obtains usage information that is output from notification system 100 and is generated and output after notification system 100 and terminal apparatus 400 start communication. Presenter 480 presents user U with the usage method obtained by terminal communicator 410.

According to this configuration, user U can receive notification of usage information that is related to the method for using first home appliance 200, and is expressed in a second language, from terminal apparatus 400, which is, for example, a mobile terminal. Therefore, user U can operate first home appliance 200 while visually, audibly, or otherwise checking usage information expressed in a language that is easy for user U to understand, for example. Terminal apparatus 400 obtains usage information generated after notification system 100 and terminal apparatus 400 start communication. For that reason, notification system 100 can notify user U of usage information, for example, generated using the latest information at that time. Therefore, first home appliance 200 is used more efficiently by user U.

Terminal apparatus 400 according to the present embodiment further includes identification information obtainer 460 that obtains first identification information that identifies first home appliance 200. Terminal communicator 410 transmits the first identification information obtained by identification information obtainer 460 to notification system 100. Terminal communicator 410 obtains usage information generated and output by notification system 100 after the first identification information has been received.

According to this configuration, user U can transmit, to notification system 100, the first identification information that identifies first home appliance 200 that user U plans to use, using terminal apparatus 400. That is, the first identification information can be transmitted to notification system 100 using terminal apparatus 400 that receives usage information generated and output by notification system 100. For that reason, user U can use, for example, familiar terminal apparatus 400 to cause notification system 100 to identify (specify) first home appliance 200 that user U plans to use.

### [Embodiment 2]

Hereinafter, notification system 100 according to Embodiment 2 will be described with reference mainly to FIG. 8 to FIG. 10. FIG. 8 is a block diagram showing the functional configuration of notification system 100 according to Embodiment 2. In FIG. 8, the illustration of network 500 is omitted. FIG. 9 is a diagram showing an example of information stored in storage 150 included in notification system 100 according to Embodiment 2. FIG. 10 is a flow chart showing an example of the operation of notification system 100 according to Embodiment 2.

It should be noted that the overall configuration of home appliance setting system 1 including notification system 100 according to the present embodiment is the same as that of Embodiment 1 (see FIG. 1 and FIG. 2), and the description thereof will be omitted. The basic configuration of first home appliance 200 and second home appliance 300 is also the same as in Embodiment 1 (see FIG. 2). In addition, the present embodiment has many similarities to Embodiment 1, and therefore the differences from Embodiment 1 will be described with emphasis. One of the differences between the present embodiment and Embodiment 1 mentioned above is that the usage information is generated not only based on whether the languages set in first home appliance 200 and second home appliance 300 are the same, but also on the differences in the characteristics of the regions in which these home appliances have been installed.

### [2-1. Configuration of notification system]

As shown in FIG. 8, notification system 100 according to the present embodiment includes communicator 101, information generator 120, and storage 150. Communicator 101 includes information obtainer 110 and transmitter 115 that transmits usage information output from information generator 120. Information generator 120 includes determiner 121 and usage information generator 122 that generates usage information in accordance with the determination result of determiner 121. These configurations are the same as notification system 100 according to Embodiment 1.

In the present embodiment, information obtainer 110 obtains first region information and second region information in addition to first language information indicating the first language set in first home appliance 200 and second language information indicating the second language set in second home appliance 300. The first region information is information related to the first region in which first home appliance 200 is installed. The second region information is information related to the second region in which second home appliance 300 is installed. Information generator 120 generates, using the first language information, second language information, first region information, and second region information, usage information related to the method for using first home appliance 200, and outputs the usage information. Specifically, when generating usage information expressed in a second language, information generator 120 generates usage information including content based on the difference between the characteristics of the first region and the characteristics of the second region. Characteristics of the first region are characteristics that are related to the climate, customs, general knowledge, and/or the like of the first region, and involves in the operation of home appliances. The characteristics of the second region are in the same manner.

For example, when first home appliance 200b, which is a washing machine, is installed in Japan which is the place of stay of user U, information obtainer 110 obtains, for example, that the daily water used in Japan is soft water, as the first region information. That is, information related to the environment of the first region where first home appliance 200 is installed (water quality of daily use (soft water or hard water, etc.), or climate classification (tropical, temperate, or cold zone, etc.)), and the like are specified as characteristics of the first region. Other examples of the characteristics of the first region specified from the first region information include information related to the operation and the like of the home appliance device, which is generally considered to be prerequisite knowledge or common knowledge when operating a home appliance device of the same type as first home electric device 200b in the first region. For example, when the first region is China, the standard output of a microwave in China, "1000 W" may be specified as a characteristic of the first region.

For example, first home appliance 200b installed in Japan which is the place of stay of user U, transmits, as first region information, first region information including "soft water" indicating the quality of daily water in Japan, to notification system 100. For example, first communicator 210 of first home appliance 200b reads out the first region information stored in first storage 250 and transmits it to notification system 100 (see FIG. 8). This allows notification system 100 to specify "soft water" as a characteristic of the first region specified from the first region information. Alternatively, for example, first home appliance 200b transmits first region information including region identification information to notification system 100. Region identification information is information such as "Japan", which is the country name, identification information (country code, etc.) that identifies Japan, and the like. Notification system 100 can specify "soft water," a characteristic of Japan, which is the first region, by using the region identification information shown in the first region information and regional characteristic information 800 stored, for example, in storage 150. In the present embodiment, information generator 120 specifies the characteristic of the first region.

That is, notification system 100 obtains first region information including the characteristic itself of the first region, or obtains region identification information for identifying the first region. In either case, notification system 100 can specify the characteristic of the first region. It should be noted that when first home appliance 200a transmits first region information including information indicating the characteristic of the first region to notification system 100, first home appliance 200a may obtain the information indicating the characteristic from an external apparatus capable of communicating with first home appliance 200a.

The above matters related to the first region information also apply to the second region information. That is, in the present embodiment, if, for example, the second region where user U's home is located is in France, second home appliance 300b, which is a washing machine, transmits, to notification system 100, second region information including "hard water" indicating the quality of daily basis water in France. Alternatively, second home appliance 300b transmits the second region information, including the region identification information for identifying "France", to notification system 100. This allows notification system 100 to specify "hard water", a characteristic of France, which is a second region.

In addition to determining whether the first language and second language are the same as described in Embodiment 1, determiner 121 of information generator 120 determines whether the characteristic shown in the first region information and the characteristic shown in the second region information are the same. Usage information generator 122 of information generator 120 generates usage information based on the determination result of determiner 121. It should be noted that usage information generator 122 may determine whether the characteristic shown in the first region information and the characteristic shown in the second region information are the same.

In notification system 100 according to the present embodiment configured in this manner, for example, information shown in FIG. 9 is stored in storage 150. As shown in FIG. 9, storage 150 stores first home appliance information 601, second home appliance information 602, user device information 610, and regional characteristic information 800. In the present embodiment, first home appliance information 601 includes information items such as "device ID", "type", "setting language", and "function" for first home appliance 200b, which is a washing machine. In the present embodiment, first home appliance information 601 further includes the "region ID" which is the first region information, as information items. The "region ID" is region identification information that identifies the region in which first home appliance 200b is installed. In FIG. 9, "Japan" indicating the country name of the first region is included in first home appliance information 601 as the region identification information. In the present embodiment, regional characteristic information 800 stored in storage 150 includes information indicating the characteristic of the region, for example, for each region (for example, each country).

Determiner 121 of information generator 120 determines whether the characteristic of the first region specified by the first region information is the same as the characteristic of the second region specified by the second region information. Specifically, determiner 121 can specify the characteristic (for example, "soft water") of the first region by obtaining first region information (for example, region identification information "Japan") from first home appliance information 601, and using regional characteristic information 800. Similarly, determiner 121 can specify the characteristic (for example, "hard water") of the second region by using second home appliance information 602 and regional characteristic information 800.

When the determination result by determiner 121 indicates that the first language and second language are different and the characteristic of the first region and the characteristic of the second region are different, usage information generator 122 generates usage information to be notified to the user U, which is based on the difference in these characteristics and expressed in the second language. The generated usage information is stored in storage 150. For example, as shown in FIG. 9, when the second language is French, usage information 710 expressed in French is stored in storage 150. Transmitter 115 included in communicator 101 of notification system 100 obtains usage information expressed in the second language from usage information generator 122 or storage 150 and transmits it to, for example, terminal apparatus 400. As a result, usage information 710 expressed in the second language is notified to user U.

It should be noted that as mentioned above, first home appliance 200 may transmit first region information indicating the characteristic of the first region to notification system 100 rather than region identification information. In this case, first home appliance information 601 includes characteristic information (for example, "soft water") indicating the characteristic of the first region as the first region information. For that reason, information generator 120 of notification system 100 can directly specify the characteristic of the first region from the first region information included in first home appliance information 601.

### [2-2. Operation of notification system]

Next, an example of the operation of notification system 100 according to Embodiment 2 will be described with reference to FIG.10. As shown in FIG. 10, in addition to the operations shown in FIG. 6, notification system 100 according to the present embodiment performs obtaining of first region information (S200), obtaining of second region information (S201), and determining whether the first regional characteristic and second regional characteristic are the same (S202). It should be noted that "first regional characteristic" is a characteristic of the first region specified by first region information, and "second regional characteristic" is a characteristic of the second region specified by second region information. Hereinafter, an example of the operation of the notification system when first home appliance information 601 and second home appliance information 602 shown in FIG. 9 are stored in storage 150 will be described.

As shown in FIG. 10, notification system 100 obtains the first functional information (S100), the first language information (S101), and the second language information (S102). Notification system 100 further obtains the first region information (S200) and the second region information (S201). In the present embodiment, information obtainer 110 of notification system 100 obtains first home appliance information 601 including first functional information, first language information, and first region information from first home appliance 200b, which is a washing machine, and stores it in storage 150 (see FIG. 9). Information obtainer 110 obtains second home appliance information 602 including second functional information, second language information, and second region information from second home appliance 300b, which is a washing machine, and stores it in storage 150 (see FIG. 9).

When using first home appliance 200b installed at the hotel which is the place of stay, user U launches the setting app installed on terminal apparatus 400 of user U. Accordingly, terminal apparatus 400 starts communication with notification system 100. As a result, in notification system 100 according to the present embodiment, similar to notification system 100 according to Embodiment 1, user device information 610 shown in FIG. 9 is stored in storage 150. First home appliance 200b and second home appliance 300b, which are subject to determining whether the first language and the second language match (S103), are specified by, for example, information generator 120.

Determiner 121 of information generator 120 determines whether the first language and the second language are the same (S103). In the present embodiment, determiner 121 determines that the first language and the second language are different (No in S103). In this case, determiner 121 obtains the first region information from first home appliance information 601 which corresponds to first home appliance 200b and is stored in storage 150. It should be noted that when determiner 121 determines that the first language and the second language are the same (Yes in S103), the operation of notification system 100 ends.

When the first language and the second language are different, in the present embodiment, determiner 121 obtains the second region information from second home appliance information 602 which corresponds to second home appliance 300b and is stored in storage 150. In the present embodiment, as mentioned above, determiner 121 obtains the region identification information "Japan" as the first region information, and the region identification information "France" as the second region information. Using the obtained first and second region information and regional characteristic information 800, determiner 121 specifies the "soft water" that is the first regional characteristic and the "hard water" that is the second regional characteristic. Determiner 121 further determines whether the specified first and second regional characteristics are the same (S202). In the present embodiment, determiner 121 determines that the first and second regional characteristics are different (No in S202). Usage information generator 122 of information generator 120 generates and outputs usage information to be notified to user U (S104). In the present embodiment, usage information that indicates the content based on the difference between the first and second regional characteristics, and is expressed in a second language is generated. Specifically, use information expressed in French is generated, such as, for example, "Since it is washed in soft water, it can remove dirt even with cold water". It should be noted that storage 150 stores a template (not shown) that is for usage method when the water quality of the water used by the two washing machines to be compared differs, and is expressed in a predetermined language. Usage information generator 122 can generate usage information 710 (see FIG. 9) expressed in French by converting the template into usage information expressed in French using machine translation or the like, or by obtaining the template expressed in French from storage 150.

When determiner 121 determines that the first and second regional characteristics are the same (Yes in S202), the operation of notification system 100 ends. It should be noted that when determiner 121 determines that the first and second regional characteristics are the same (Yes in S202), usage information generator 122 may generate and output usage information indicating that the first and second regional characteristics are the same.

It should be noted that information generator 120 according to the present embodiment can generate usage information including not only the content based on the difference between the first regional characteristic and the second regional characteristic described above, but also the content based on the first functional information as explained in Embodiment 1. For example, a case is assumed where first home appliance information 601 includes multiple operation modes of first home appliance 200b as the first functional information (information item "function"), and among these multiple operation modes, "careful mode" with strong water flow and a large number of rinses is included. In this case, usage information generator 122 included in information generator 120 may generate usage information expressing such a content in French that, for example, "Since it is washed in soft water, it can remove dirt even with cold water. When you are concerned about dirt, please use the careful mode". Information generator 120 may individually generate and output usage information including content based on the difference between the first regional characteristic and the second regional characteristic, and usage information including content based on the first functional information.

Usage information 710 generated and output by information generator 120 is transmitted from transmitter 115 to terminal apparatus 400. Transmitted usage information 710 is received by terminal communicator 410 of terminal apparatus 400. In this case, an image that is based on usage information 710 obtained by terminal communicator 410 of terminal apparatus 400 and includes a notification statement written in French is displayed on display panel 401 of terminal apparatus 400. That is, presenter 480 can present usage information 710 expressed in French to user U, that is, notify user U of usage information 710. It should be noted that in addition to or in place of displaying the notification statement, presenter 480 may cause the speaker apparatus (not shown) included in presenter 480 to output a French voice indicating the contents of usage information 710.

The usage information output from information generator 120 may be received by first home appliance 200b in addition to or in place of terminal apparatus 400. For example, when first home appliance 200b receives usage information 710 expressed in French, first home appliance 200b may output a French voice from the speaker apparatus mounted on first home appliance 200b. Even in this case, user U can be notified of usage information 710 expressed in French, which is the second language. First home appliance 200b may receive usage information 710 from notification system 100 in communication with notification system 100, and may receive usage information 710 received by terminal apparatus 400 from terminal apparatus 400.

In the above, usage information generated based on differences in water quality between the first and second regions has been exemplified as usage information generated based on differences between the first regional characteristic and the second regional characteristic, but there is no particular limitation on the content of usage information transmitted to terminal apparatus 400 by notification system 100 according to the present embodiment. Information generator 120 may generate usage information, for example, that includes content based on differences in humidity, temperature, air pressure, frequency of power outages, or degree of air pollution between the first and second regions.

In the present embodiment, the operation of notification system 100 and the like when user U uses first home appliance 200b, which is a washing machine, is explained, but there is no particular limitation on the type of first home appliance 200 that is associated with usage information notified to user U.

The order of operations such as obtaining first language information and second language information executed by notification system 100 according to the present embodiment is not limited to the order shown in FIG. 10. For example, notification system 100 according to the present embodiment may determine whether the first and second regional characteristics are the same (S202) before determining whether the first and second languages are the same (S103). Even in this case, notification system 100 can notify user U of usage information that includes content based on the difference between the first region characteristic and the second region characteristic, and is expressed in the second language.

### [2-3. Effects etc.]

As mentioned above, notification system 100 according to the present embodiment includes the following technical features in addition to the technical features included in Embodiment 1 described above.

In notification system 100 according to the present embodiment, information obtainer 110 obtains first region information related to the first region in which first home appliance 200 is installed, and second region information related to the second region in which second home appliance 300 is installed. When generating usage information, information generator 120 generates usage information including content based on the difference between the characteristic of the first region specified by the first region information and the characteristic of the second region specified by the second region information.

According to this configuration, the usage information that includes content that takes into account differences between the first regional characteristic and the second regional characteristic, and is expressed in the second language is notified to user U. For example, user U can check usage information expressed in the second language using terminal apparatus 400, which is a mobile terminal or the like. Therefore, user U can efficiently use first home appliance 200. That is, first home appliance 200 used by user U can operate efficiently. More specifically, even when there is a difference between the characteristic of the second region, which is the place of residence of the user, and the characteristic of the first region including the place of stay, user U can be notified of usage information that allows first home appliance 200 to perform an operation to fill the difference. That is, since user U can use first home appliance 200 at the place of stay in accordance with the user's own intentions, the possibility of using first home appliance 200 in an incorrect manner is reduced, for example.

For example, as in the present embodiment, when user U stays in Japan from the user's home in France, user U can efficiently use first home appliance 200b at the place of stay. Specifically, in France, it is customary to wash using hard water, which is difficult to remove dirt, so the water temperature is raised, while in Japan, since it is washed using soft water, it is possible to efficiently remove dirt even without hot water. In this situation, according to notification system 100 according to the present embodiment, user U can be notified using French language of usage information based on differences in water quality (i.e., differences in characteristics between regions) of water used in washing in France and Japan. As a result, user U can do laundry in Japan, which is the place of stay, just like user U do at home. It should be noted that since clothes tend to be easily damaged when washed in warm water, the content that the water temperature does not need to be raised, which is included in the usage information according to the present embodiment, is even more beneficial to user U.

It should be noted that terminal apparatus 400 that communicates with the notification system according to the present embodiment has a configuration that is common to terminal apparatus 400 according to Embodiment 1, and can perform operations that are common to terminal apparatus 400 according to Embodiment 1. According to terminal apparatus 400 according to the present embodiment, at least the effects common to those of terminal apparatus 400 according to Embodiment 1 are achieved.

### [Embodiment 3]

Hereinafter, notification system 100 according to Embodiment 3 will be described with reference mainly to FIG. 11 to FIG. 13. FIG. 11 is a block diagram showing the functional configuration of notification system 100 according to Embodiment 3. FIG. 12 is a diagram showing an example of information stored in storage 150 of notification system 100 according to Embodiment 3. FIG. 13 is a flow chart showing an example of the operation of notification system 100 according to Embodiment 3.

It should be noted that the overall configuration of home appliance setting system 1 including notification system 100 according to the present embodiment is the same as that of Embodiment 1 (see FIG. 1 and FIG. 2), and the description thereof will be omitted. The basic configurations of first home appliance 200 and second home appliance 300 are the same as in Embodiment 1 (see FIG. 2). In addition, the present embodiment has many similarities to Embodiment 1, and therefore the differences from Embodiment 1 will be described with emphasis. One difference between the present embodiment and Embodiment 1 mentioned above is that, in order to generate usage information, not only the match or mismatch of languages set in first home appliance 200 and second home appliance 300 is used, but also the operation history of second home appliance 300 is utilized.

### [3-1. Configuration of notification system]

As shown in FIG. 11, notification system 100 according to the present embodiment includes communicator 101, information generator 120, and storage 150. Communicator 101 includes information obtainer 110 and transmitter 115 that transmits usage information output from information generator 120. Information generator 120 includes determiner 121 and usage information generator 122 that generates usage information in accordance with the determination result of determiner 121. These configurations are common to notification system 100 according to Embodiment 1.

In the present embodiment, information obtainer 110 obtains operation history information 900 in addition to information such as first language information indicating the first language set in first home appliance 200. Operation history information 900 is information indicating the operation history of second home appliance 300. Operation history information 900 includes information indicating what operation second home appliance 300 has performed. Specifically, operation history information 900 includes, for example, information (for example, mode name) for specifying the operation mode executed by second home appliance 300, the contents of the operation mode, and the like. For example, second home appliance 300 stores operation history information 900 including the above contents in second storage 350. It should be noted that operation history information 900 may be stored in an external apparatus capable of communicating with second home appliance 300.

Information generator 120 generates usage information related to a method for using first home appliance 200, based on the first language information, second language information, first functional information, second functional information, and operation history information 900, and outputs the usage information. Specifically, when generating usage information expressed in the second language, information generator 120 specifies a predetermined operation included in operation history information 900 and determines the operation of the first home appliance corresponding to the predetermined operation using the first functional information. Information generator 120 generates usage information including contents for causing first home appliance 200 to perform the determined operations.

Specifically, in addition to the determination of whether the first language and second language are the same as described in Embodiment 1, determiner 121 of information generator 120 determines whether the functions of first home appliance 200a include an operation mode corresponding to a predetermined operation specified from operation history information 900. Operation history information 900 includes a plurality of operation modes recorded as a history of operations performed by second home appliance 300a, and determiner 121 specifies an operation mode that satisfies a predetermined condition as a predetermined operation from the plurality of operation modes. Usage information generator 122 of information generator 120 determines the operation of first home appliance 200a corresponding to the predetermined operation specified by determiner 121 using the first functional information and the second functional information. Usage information generator 122 generates and outputs usage information including contents for causing first home appliance 200a to perform the determined operations. It should be noted that usage information generator 122 may perform the process of specifying a predetermined operation from operation history information 900.

In notification system 100 according to the present embodiment configured in this manner, for example, information shown in FIG. 12 is stored in storage 150. As shown in FIG. 12, storage 150 stores first home appliance information 601, second home appliance information 602, user device information 610, and operation history information 900. In the present embodiment, first home appliance information 601 includes information items such as "device ID", "type", "setting language", and "function" for first home appliance 200a, which is a microwave oven. The "function" which is the first functional information includes the mode number, name, and the contents of the operation mode (output power and set time) of the operation mode that first home appliance 200a can execute. Second home appliance information 602 includes information items such as "device ID", "type", "setting language", and "function" for second home appliance 300a, which is a microwave oven. The "function" which is the second functional information includes the mode number, name, and the contents of the operation mode (output power and set time) of the operation mode that second home appliance 300a can execute.

It should be noted that when the home appliance corresponding to first home appliance information 601 and second home appliance information 602 is a washing machine, the first and second functional information includes information such as the amount of water used for washing. In this case, for example, the second functional information is information related to various functions of second home appliance 300b that can be executed when user U uses second home appliance 300b. The second functional information may include, for example, a water amount and the number of rinses that can be selected when washing clothes placed in the washing tub. The second functional information may include information indicating various operational modes that can be performed in a washing machine, such as an automatic mode for washing clothes cleanly and a home cleaning mode for washing delicate clothes carefully with plenty of water.

Operation history information 900 includes the operation history of second home appliance 300a located at user U's home. Specifically, operation history information 900 includes information items such as "mode number" and "mode name", which are the number and name of the operation mode executed by second home appliance 300a, and "execution time", which is the time (date and time) in which the operation mode was executed. It should be noted that it is not essential that the above three information items be recorded in operation history information 900. Operation history information 900 may include, for example, only one of the "mode number" and "mode name". Even in this case, information generator 120 can specify, for example, the content of the most commonly used operation mode by referring to operation history information 900 and the second functional information ("function") of second home appliance information 602. Operation history information 900 may include other information not shown in FIG. 12. For example, the end time, the measurement time, or the like of the used operation mode may be included in operation history information 900.

Determiner 121 of information generator 120 specifies, for example, the operation mode that has the most number of times of use out of a plurality of operation modes, as a predetermined operation. Determiner 121 further determines whether the first functional information included in first home appliance information 601 includes the predetermined operation as the operation mode. Determiner 121 transmits the determination result to usage information generator 122.

When the determination result by determiner 121 indicates, for example, that the first language and the second language are different, and that the first functional information does not include the predetermined operation, usage information generator 122 generates usage information indicating the method for using first home appliance 200 such that the result of the operation of first home appliance 200a is the same as the result of second home appliance 300a performing the predetermined operation. This usage information is generated using the first functional information included in first home appliance information 601 and the second functional information included in second home appliance information 602.

That is, when the predetermined operation is, for example, "omelet mode", usage information generator 122 generates usage information for reproducing the result of second home appliance 300a in the home running the "omelet mode" by first home appliance 200a at the place of stay. The generated usage information is stored in storage 150. For example, as shown in FIG. 12, when the second language is French, usage information 720 expressed in French is stored in storage 150. Transmitter 115 included in communicator 101 of notification system 100 obtains usage information expressed in the second language from usage information generator 122 or storage 150 and transmits it to, for example, terminal apparatus 400. As a result, usage information 720 expressed in the second language is notified to user U.

### [3-2. Operation of notification system]

Next, an example of the operation of notification system 100 according to Embodiment 2 will be described with reference to FIG. 13. As shown in FIG. 13, in addition to the operations shown in FIG. 6, notification system 100 according to the present embodiment performs obtaining second functional information (S300) and obtaining operation history information 900 (S301). Hereinafter, an example of the operation of the notification system when the first and second home appliance information 601 and 602 shown in FIG. 12 are stored in storage 150 will be described.

As shown in FIG. 13, notification system 100 obtains the first functional information (S100), obtains the second functional information (S300), obtains the first language information (S101), and obtains the second language information (S102). Notification system 100 further obtains operation history information 900 (S301). In the present embodiment, information obtainer 110 of notification system 100 obtains first home appliance information 601 including first functional information and first language information from first home appliance 200a, which is a microwave oven, and stores it in storage 150 (see FIG. 12). Information obtainer 110 obtains second home appliance information 602 including second functional information and second language information from second home appliance 300a, which is a microwave oven, and stores it in storage 150 (see FIG. 12). Information obtainer 110 further obtains operation history information 900 indicating the operation history of second home appliance 300a from second home appliance 300a, and stores it in storage 150 (see FIG. 12).

When using first home appliance 200a installed at the hotel which is the place of stay, user U launches the setting app installed on terminal apparatus 400 of user U. Accordingly, terminal apparatus 400 starts communication with notification system 100. As a result, in notification system 100 according to the present embodiment, similar to notification system 100 according to Embodiment 1, user device information 610 shown in FIG. 12 is stored in storage 150. First and second home appliances 200b and 300b which are subject to determining whether the first language and the second language match (S103), are specified by, for example, information generator 120.

Determiner 121 of information generator 120 determines whether the first language and the second language are the same (S103). In the present embodiment, determiner 121 determines that the first language and the second language are different (No in S103). Usage information generator 122 of information generator 120 generates and outputs usage information to be notified to user U (S104). It should be noted that when determiner 121 determines that the first language and the second language are the same (Yes in S103), the operation of notification system 100 ends.

More specifically, in the present embodiment, when it is determined that the first language and the second language are different, determiner 121 specifies a predetermined operation from operation history information 900 (S310). Determiner 121 specifies, for example, the "omelet mode", which has the most number of uses, as a predetermined operation. When the first functional information of first home appliance information 601 includes an operation mode corresponding to "omelet mode" as the operation mode, usage information generator 122 determines the operation mode as the operation of first home appliance 200a corresponding to the "omelet mode" (S311). In this case, usage information generator 122 generates usage information that includes, for example, the mode number of the operation mode and is expressed in the second language. Usage information generator 122 generates usage information indicating the number of the operation mode corresponding to, for example, "omelet mode" (S312).

When the first functional information of first home appliance information 601 does not include an operation mode corresponding to the "omelet mode" as the operation mode, usage information generator 122 refers to the second functional information ("function") of second home appliance information 602 and determines the contents of the "omelet mode" of "600W, 120sec" as the operation of first home appliance 200a corresponding to the "omelet mode" (S311). In this case, usage information generator 122 generates usage information 720 (see FIG. 12) expressed in French, for example, with the notification content, "If you want to use the omelet mode, it is recommended that the output is set to 600 W and the set time is 120 seconds" (S312).

Usage information 720 generated and output by information generator 120 is transmitted from transmitter 115 to terminal apparatus 400. Transmitted usage information 720 is received by terminal communicator 410 of terminal apparatus 400. In this case, an image that is based on usage information 720 obtained by terminal communicator 410 of terminal apparatus 400 is displayed on display panel 401 of terminal apparatus 400. The image includes a notification statement written in French. That is, presenter 480 can present usage information 720 expressed in French to user U, that is, notify user U of usage information 720. It should be noted that in addition to or in place of displaying the notification statement, presenter 480 may cause the speaker apparatus (not shown) included in presenter 480 to output a French voice indicating the contents of usage information 720.

The usage information output from information generator 120 may be received by first home appliance 200a in addition to or in place of terminal apparatus 400. For example, when first home appliance 200a receives usage information 720 expressed in French, first home appliance 200a may output a French voice from the speaker apparatus mounted on first home appliance 200a. Even in this case, user U can be notified of usage information 720 expressed in French, which is the second language. First home appliance 200a may receive usage information 720 from notification system 100 in communication with notification system 100, and may receive usage information 720 received by terminal apparatus 400 from terminal apparatus 400.

In the present embodiment, the operation of notification system 100 and the like when user U uses first home appliance 200a, which is a microwave oven, is explained, but there is no particular limitation on the type of first home appliance 200 that is associated with usage information notified to user U.

The order of operations such as obtaining first language information and second language information executed by notification system 100 according to the present embodiment is not limited to the order shown in FIG. 12. For example, notification system 100 according to the present embodiment may obtain operation history information (S301) before obtaining first language information (S101) and obtaining second language information (S102). Notification system 100 according to the present embodiment may obtain operation history information (S301) after determining whether the first language is the same as the second language (S103), and before generating and outputting usage information (S104). That is, when the first language and the second language are different (S103), for example, information obtainer 110 of notification system 100 may obtain operation history information 900 by requesting second home appliance 300a to transmit operation history information. That is, when notification system 100 performs operations such as determining whether the first language is the same as the second language (S103), generating and outputting usage information (S104), it is sufficient to obtain various information necessary for the operation at that time. Accordingly, notification system 100 according to the present embodiment can notify user U of usage information related to the method for using first home electric device 200a, which takes into account operation history information 900 of second home appliance 300a, and which is expressed in a second language.

### [3-3. Effects etc.]

As described above, notification system 100 according to the present embodiment has the following technical features in addition to the technical features provided in Embodiment 1.

In notification system 100 according to the present embodiment, information obtainer 110 obtains second functional information related to the functions of second home appliance 300 and operation history information 900 indicating the history of the operations of second home appliance 300. When generating usage information, information generator 120 specifies the operations included in operation history information 900. Information generator 120 determines the operation of first home appliance 200 corresponding to the specified operation using the first functional information. Information generator 120 generates usage information including content for causing first home appliance 200 to perform the determined operation.

According to this configuration, when user U uses, for example, first home appliance 200 at the place of stay that is different from the place of residence of user U, user U can be notified via terminal apparatus 400 or the like of the usage method of reproducing the functions of second home appliance 300 that were often used in second home appliance 300 in the home, in first home appliance 200.

More specifically, according to notification system 100 according to the present embodiment, usage information is generated taking into account operation history information 900 of second home appliance 300 of user U's home. For that reason, for example, user U is notified of usage information expressed in the second language, which is used to reproduce an operation mode that was frequently used in second home electric appliance 300 at home in first home electric appliance 200 at the place of stay. As a result, user U can use first home appliance 200 at the place of stay in the same way as second home appliance 300 at home. That is, first home appliance 200 used by user U can operate more efficiently.

It should be noted that the above-described technical features included in notification system 100 according to the present embodiment may be provided in notification system 100 according to Embodiment 2 described above. That is, notification system 100 can generate usage information including contents based on the differences between the characteristics of the first region and the characteristics of the second region, and can also generate usage information taking into account operation history information 900 of second home appliance 300.

### [4. Others]

As described above, Embodiments 1 to 3 have been described as examples of the technologies disclosed in this application. However, the technology in this disclosure is not limited thereto, and can be also applied to the embodiment in which changes, replacements, additions, omissions, and the like have been made. It is also possible to combine the components described in above Embodiments 1 to 3 to form a new embodiment.

In each of the above-described embodiments, each component may be constructed of dedicated hardware or may be realized by executing a software program suitable for each component. Each of the components may be realized by a program executer such as a CPU or a processor, reading out and executing software programs recorded on a recording medium such as a hard disk or a semiconductor memory. Here, the software for implementing the home appliance, terminal, server, and the like of the above-described embodiments is a program for causing a computer to execute each step included in the flow chart shown in the figure.

The following cases are also included in this disclosure.

Specifically, each of the above apparatuses is a computer system including a microprocessor, ROM, RAM, a hard disk unit, a display unit, a keyboard, a mouse, and the like. The RAM or hard disk unit stores a computer program. The microprocessor operates in accordance with the computer program, so that each apparatus achieves its functionality. Here, the computer program is composed of a combination of a plurality of instruction codes indicating instructions to the computer in order to achieve a predetermined function.

Some or all of the components included in each of the apparatuses described above may be made up of a single system large scale integration (LSI). The system LSI is an ultra-multifunctional LSI manufactured by integrating a plurality of components on a single chip, and specifically, it is a computer system that includes a microprocessor, a ROM, a RAM, and the like. The RAM stores a computer program. The microprocessor operates according to the computer program, so that the system LSI achieves its functionality.

Some or all of the components included in each of the apparatuses described above may include an IC card or a single module that can be detachably attached to each apparatus. The IC card or the module is a computer system that includes a microprocessor, ROM, RAM, and the like. The IC card or the module may include the ultra-multifunction LSI described above. The microprocessor operates according to a computer program, so that the IC card or the module achieves its functionality. The IC card or the module may be tamper resistant.

The present disclosure may be the method shown above. In addition, these methods may be computer programs that implement these methods by a computer, or digital signals made up of the computer program.

In addition, the present disclosure may be the computer programs or the digital signals recorded on a computer-readable recording medium, such as a flexible disk, hard disk, CD-ROM, MO, DVD, DVD-ROM, DVD-RAM, BD (Blu-ray (registered trademark) Disc), semiconductor memory, and the like. In addition, the present disclosure may be the digital signals recorded on these recording media.

It should be noted that since each embodiment mentioned above is intended to illustrate the techniques of the present disclosure, various changes, replacements, additions, omissions, and the like can be made within the scope of the claims or the equivalents thereof. In addition, any combination of two or more claims from among the multiple claims set forth in the scope of claims at the time of filing of this application is also included in the present invention, within the scope of no technical conflict.

### [Industrial Applicability]

This disclosure is applicable to a notification system in which information related to the method for using one of two home appliances installed in different regions is output in the language set for the other home appliance.

### [Reference Signs List]

- 1: Home appliance setting system
- 100: Notification system
- 101: Communicator
- 110: Information obtainer
- 115: Transmitter
- 120: Information generator
- 121: Determiner
- 122: Usage information generator
- 150: Storage
- 200, 200a, 200b: First home appliance
- 210: First Communicator
- 250: First Storage
- 291: Voice
- 300, 300a, 300b: Second home appliance
- 310: Second communicator
- 350: Second storage
- 400: Terminal apparatus
- 401: Display panel
- 410: Terminal communicator
- 460: Identification information obtainer
- 480: Presenter
- 491: Notifier
- 500: Network
- 601: First home appliance information
- 602: Second home appliance information
- 610: User equipment information
- 700, 710, 720: Usage information
- 800: Regional characteristic information
- 900: Operation history information
- U: User

## Claims

1. A notification system for notifying a user of information related to a method for using a first home appliance, the notification system comprising:
an information obtainer that obtains first language information related to a first language set for the first home appliance and second language information related to a second language set for a second home appliance different from the first home appliance; and
an information generator that generates usage information related to a method for using the first home appliance, based on the first language information and the second language information, and outputs the usage information,
wherein when the first language shown in the first language information is different from the second language shown in the second language information, the information generator generates the usage information that is expressed in the second language.

2. The notification system according to claim 1,
wherein the information obtainer further obtains first functional information related to a function of the first home appliance, and
when generating the usage information, the information generator, using the first functional information, generates the usage information that includes the first functional information and is expressed in the second language.

3. The notification system according to claim 2,
wherein the information obtainer further obtains:
second functional information related to a function of the second home appliance; and
operation history information indicating a history of operation that has been performed by using the function of the second home appliance, and
when generating the usage information, the information generator specifies a predetermined operation included in the operation history information, determines an operation of the first home appliance corresponding to the predetermined operation by using the first functional information and the second functional information, and generates the usage information including a content for causing the first home appliance to perform the operation that has been determined.

4. The notification system according to any one of claims 1 to 3,
wherein the information obtainer further obtains first region information related to a first region in which the first home appliance is installed, and second region information related to a second region in which the second home appliance is installed, and
when generating the usage information, the information generator generates the usage information that includes a content based on a difference between a characteristic of the first region specified by the first region information and a characteristic of the second region specified by the second region information.

5. The notification system according to any one of claims 1 to 3, further comprising:
a storage,
wherein the storage stores:
first home appliance information that includes: first identification information for identifying the first home appliance; and information related to the first home appliance;
second home appliance information that includes: second identification information for identifying the second home appliance; and information related to the second home appliance; and
user device information that includes: user identification information for identifying the user; and information for specifying the second home appliance information associated with the user identification information,
the first home appliance information includes the first language information,
the second home appliance information includes the second language information,
the information obtainer further obtains the first identification information and the user identification information from outside the notification system,
when the information obtainer obtains the first identification information and the user identification information, the information generator, by referring to the storage:
obtains the first language information from the first home appliance information associated with the first identification information;
obtains the second language information from the second home appliance information associated with the user identification information; and
generates the usage information based on the first language information and second language information that have been obtained, and outputs the usage information.

6. A terminal apparatus that communicates with the notification system according to any one of claims 1 to 3, the terminal apparatus comprising:
a terminal communicator that obtains the usage information output from the notification system, the usage information having been generated and output after the notification system begins communication with the terminal apparatus; and
a presenter that presents the method for using the first home appliance obtained by the terminal communicator to the user.

7. The terminal apparatus according to claim 6, further comprising:
an identification information obtainer that obtains first identification information for identifying the first home appliance,
wherein the terminal communicator transmits the first identification information obtained by the identification information obtainer to the notification system, and obtains the usage information generated and output by the notification system after receiving the first identification information.

8. A notification method for notifying a user of information related to a method for using a first home appliance, the notification method comprising:
obtaining first language information related to a first language set for the first home appliance and second language information related to a second language set for a second home appliance different from the first home appliance;
when the first language shown in the first language information is different from the second language shown in the second language information, generating usage information related to the method for using the first home appliance, based on the first language information and the second language information, the usage information being expressed in the second language; and
outputting the usage information that has been generated.

9. A program for causing one or more processors to execute the notification method according to claim 8.
